# DEMANDE DE BREVET EUROPEEN

(11) **EP 1 166 995 A1**
(43) Date de publication de la demande: **02.01.2002**
(21) Numéro de dépôt: 01440196.2
(22) Date de dépôt: 28.06.2001
(51) Int. Cl.: B29C 49/20, B29C 49/24, B60R 5/04

(54) **Procédé de fabrication d'un panneau creux rigide garni d'un revêtement sur ses deux faces et panneau ainsi obtenu**

(30) Priorité: 28.06.2000 FR 0008346
(71) Demandeur: Rehau S.A., 57340 Morhange (FR)
(72) Inventeur: Pennerath, Eddy, 57450 Henriville (FR)
(74) Mandataire: Metz, Paul

(57) **Abrégé**

On introduit entre les deux pièces (8, 9) de conformation d'un moule (5) sensiblement lisses, une paraison tubulaire en matière plastique chauffée dont les parois supérieure (1) et inférieure (2) sont forcées en écartement par un gaz de soufflage (A).

De chaque côté du tube, on insère une feuille de revêtement (10, 11), l'une d'entre elles (11) présentant sur sa face arrière des plots (12) préalablement solidarisés.

Lors de la fermeture du moule et du plaquage de la matière plastique par la pression du gaz, les plots déforment l'une des parois (2) et la poussent vers la paroi opposée (1) jusqu'à la thermo-jonction formant ainsi des segments de rigidification.

Le thermocollage des deux feuilles de revêtement contre les deux parois s'effectue de façon uniforme au cours de cette unique étape de moulage.

Cette invention intéresse les fabricants et utilisateurs de panneaux creux et notamment les fabricants d'accessoires automobiles.

## Description

La présente invention concerne un panneau ou un élément de panneau creux, présentant des segments de rigidification et garni d'un revêtement sur ses deux faces principales. Un tel panneau peut par exemple être utilisé pour la réalisation d'une tablette arrière amovible pour véhicule automobile.

L'invention se rapporte aussi à un procédé de fabrication d'un tel panneau ou d'un tel élément de panneau.

Les panneaux creux et notamment les tablettes arrières de véhicule sont réalisés classiquement par un procédé de moulage-soufflage avec plaquage au moulage d'un revêtement sur une des faces, en principe la face supérieure.

Au cours de ce procédé, on utilise un tube de matière plastique appelé paraison, préalablement chauffé que l'on place entre deux pièces de conformation d'un moule, la matrice et le poinçon. Après avoir fermé les deux extrémités latérales du tube en rapprochant les deux parties du moule, on insuffle à l'intérieur de la paraison un fluide gazeux sous pression, en général de l'air comprimé jusqu'à contact sous pression de la matière molle contre les parois du moule reproduisant le contretype de la forme souhaitée pour les deux faces extérieures du panneau creux et les parois de chant.

L'air comprimé de soufflage plaque la matière plastique contre les pièces du moule en laissant vide la partie centrale du panneau moulé occupée temporairement par l'air de soufflage.

Pour des besoins de solidité mécanique et de tenue planaire du panneau creux, on réalise traditionnellement au moulage des segments de rigidification en réunissant localement à chaud sur un ou plusieurs segments de droite les deux parois principales opposées l'une supérieure, l'autre inférieure du panneau creux et ceci en rapprochant localement la paroi inférieure.

Selon l'art antérieur, on utilise pour mouler la paroi inférieure du panneau tout en réalisant ces segments de rigidification, une pièce de conformation d'un moule ou poinçon comportant des reliefs, par exemple des plots en dièdre, servant de contre-formes. Cette pièce de moule imprime dans la paroi inférieure des cavités dont le sommet vient à chaud en contact avec la paroi supérieure du panneau creux jusqu'à réunir les deux parois par thermosoudage. La solidité et la rigidité du panneau creux sont ainsi assurées.

Généralement, ces panneaux creux sont recouverts sur leur face supérieure par un revêtement esthétique et de confort quelconque, par exemple une moquette synthétique. Cette garniture est très fréquente notamment dans le cas d'une tablette arrière pour véhicule automobile.

La pièce sort finie de moulage. En effet, ce revêtement est thermocollé au moulage du panneau creux. Pour cela, on insère le tapis formant le revêtement entre la pièce lisse de la face supérieure du moule et la partie supérieure du tube de matière première. Au cours du moulage-soufflage, la pression du fluide gazeux déforme et pousse les parois du tube de matière plastique. La paroi supérieure de la paraison est plaquée contre la face arrière du revêtement qui se trouve ainsi pris en sandwich entre la paroi du moule et celle supérieure du futur panneau creux.

Le revêtement est solidarisé uniformément contre la matière plastique de la paroi supérieure du panneau creux par exemple au moyen d'une couche d'adhésif préalablement appliquée ou préférentiellement par simple thermocollage.

Pour des raisons d'esthétique et de renforcement de l'isolation phonique, les constructeurs souhaitent garnir également la face inférieure du panneau creux d'un revêtement d'une certaine épaisseur, tel qu'une moquette par exemple.

Or, il n'est pas possible de coller le revêtement sur la face inférieure de la même façon que précédemment du fait de la présence dans la paroi du moule des reliefs formant les cavités de rigidification dans l'épaisseur de la paroi.

Lors du gonflement sous l'effet de la pression du fluide de soufflage, les deux parois du tube venant se plaquer contre les parois de moulage, les reliefs saillants de la pièce de moulage inférieure pénètreraient dans le revêtement qui, n'étant pas aussi souple que la matière plastique ramollie, risquerait de se déchirer au lieu de se déformer en s'étirant. Si au contraire le revêtement s'étire pour recouvrir les cavités de la paroi inférieure du panneau creux, son épaisseur est fortement réduite à ce niveau. Le revêtement risque alors, en plus de son aspect inesthétique, de ne pas remplir ses fonctions de manière satisfaisante.

On pourrait alors envisager de recouvrir la face inférieure du panneau au cours d'une seconde étape une fois le moulage terminé. Il suffirait de rapporter le revêtement à plat contre la face inférieure du panneau sans tenir compte de ses cavités de rigidification.

Ce procédé n'est cependant pas satisfaisant pour les deux raisons principales suivantes :
. Les cavités formeraient des zones non collées dont les contours pourraient se voir et ne présenteraient pas la même résistance mécanique.
. L'ensemble doit être effectué à cadence industrielle en une seule opération de fabrication et ceci pour des impératifs de production industrielle en grande série.

Le but de l'invention est de fournir un procédé industriel de fabrication par moulage d'un panneau creux en une seule opération au cours de laquelle on lui applique simultanément un revêtement sur ses deux parois principales tout en évitant les inconvénients précédemment cités et en réalisant les segments de rigidification indispensables pour assurer une bonne solidité.

Pour résoudre ce problème technique le procédé de moulage selon l'invention comporte les caractéristiques essentielles suivantes.

Contrairement au procédé antérieur, les deux pièces du moule utilisées, matrice et poinçon, sont cette fois toutes les deux sensiblement lisses, la pièce inférieure ne présentant plus de reliefs.

Les cavités sont formées lors du moulage par des plots perdus conformés dans une matière plastique préférentiellement de température de fusion plus haute et placés sur, puis solidarisés à la face arrière du revêtement devant recouvrir la paroi inférieure du panneau, préalablement à l'opération de moulage.

Lors du rapprochement des deux pièces de conformation du moule et du plaquage par le gaz de soufflage de la matière plastique de la paraison contre les parois du moule, les plots, de caractéristiques thermoplastiques différentes, déforment la paroi inférieure de la même façon que précédemment et poussent la matière de cette paroi en l'amincissant vers la paroi opposée jusqu'à la thermo-jonction.

En fin de course, la face arrière du revêtement se retrouve contre la paroi inférieure du panneau poussée par la pression du fluide gazeux de soufflage ou par un autre procédé. Le thermocollage du revêtement et de la paroi inférieure s'effectue de façon uniforme en même temps que la thermo-jonction des deux parois du panneau au niveau des segments de rigidification.

Avantageusement, on obtient ainsi en une seule opération de moulage un panneau creux fini, suffisamment rigide grâce aux segments de rigidification et garni d'un revêtement sur chacune de ses deux faces principales.

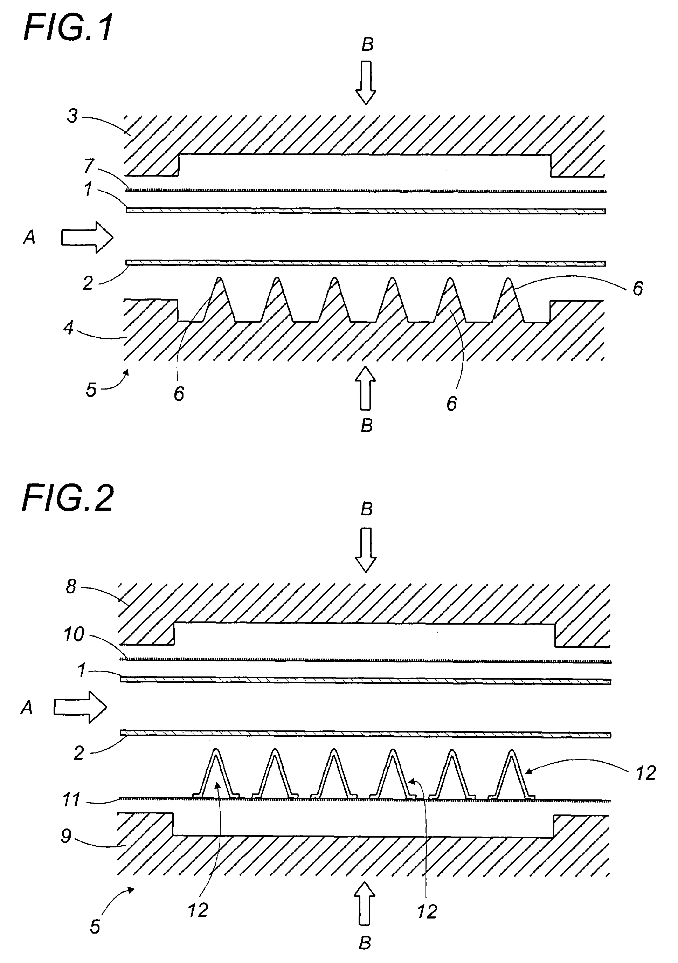

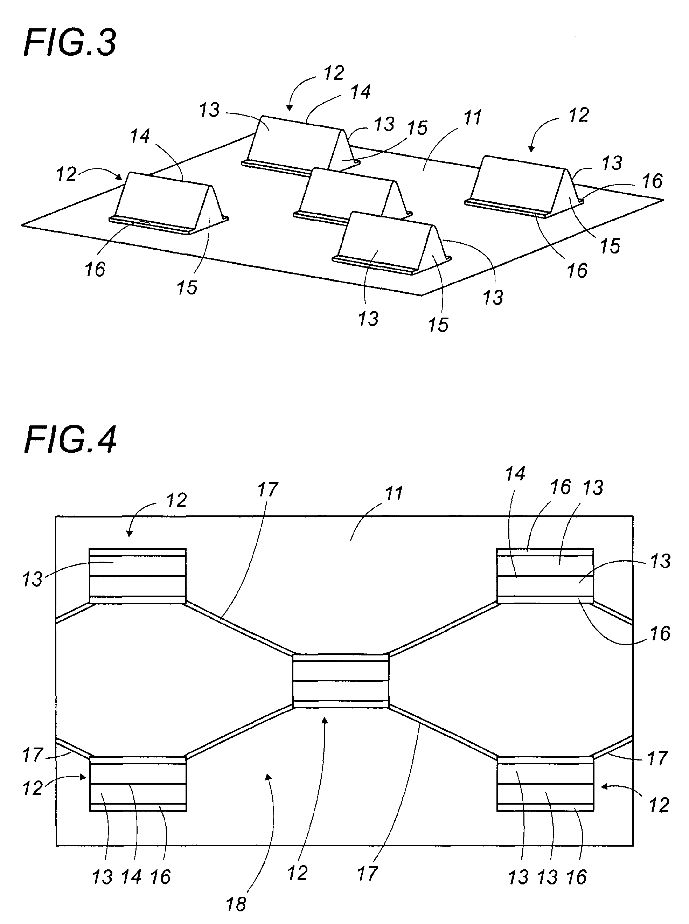

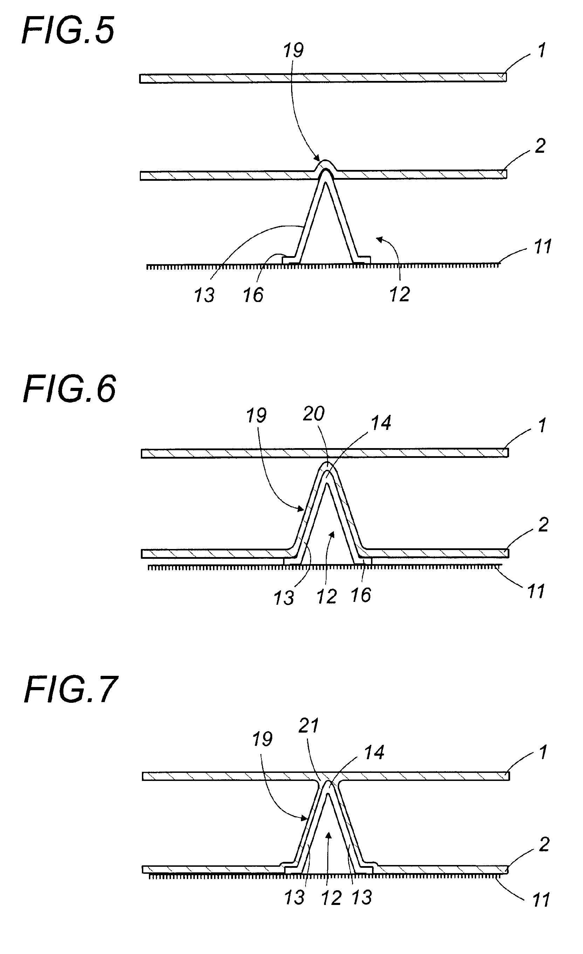

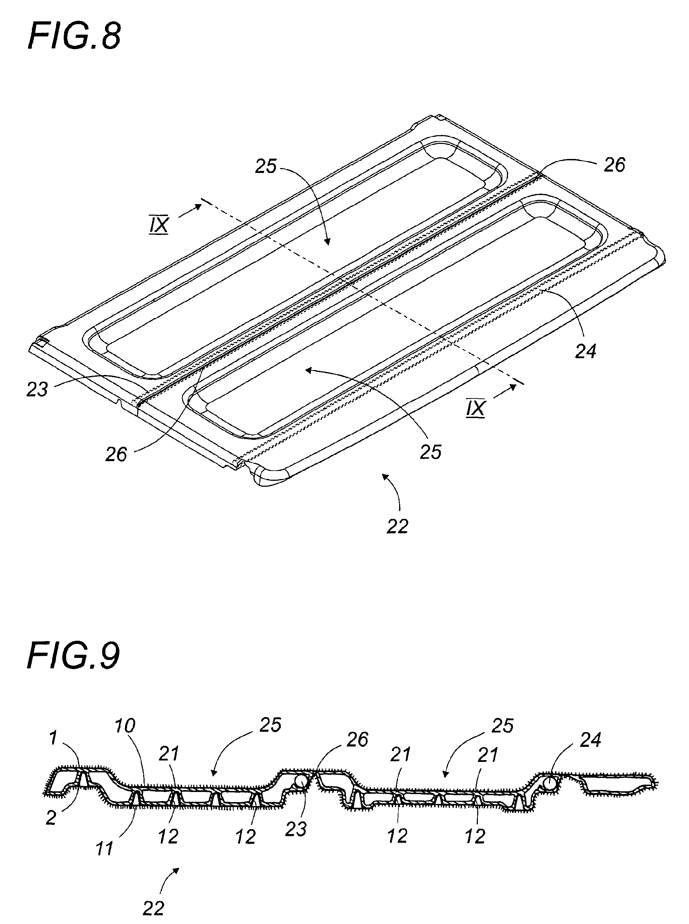

D'autres caractéristiques et avantages de l'invention apparaîtront à la lecture de la description détaillée qui va suivre, description faite en référence aux dessins annexés, dans lesquels :
. la figure 1 est une vue d'ensemble schématique en coupe illustrant le procédé de moulage selon l'art antérieur d'un panneau creux classique garni d'un revêtement sur une seule de ses faces ;
. la figure 2 est une vue d'ensemble schématique en coupe illustrant le procédé de moulage selon l'invention d'un panneau creux garni d'un revêtement sur chacune de ses faces principales ;
. la figure 3 est une vue en perspective de la face arrière d'un morceau de revêtement susceptible de se solidariser sur la face inférieure et dans la paroi du panneau creux selon la présente invention et comportant dans ce but un ensemble de plots isolés de rigidification ;
. la figure 4 est une vue de dessus de la face arrière d'un morceau de revêtement susceptible de se solidariser sur la face inférieure du panneau creux selon la présente invention et comportant dans ce but un ensemble de plots de rigidification reliés les uns aux autres à la manière d'un treillis ;
. la figure 5 est un schéma en coupe d'un détail illustrant le début de l'étape de déformation-pénétration au niveau d'un plot de rigidification de la paroi inférieure du panneau creux au cours du procédé de moulage selon l'invention ;
. la figure 6 est un schéma en coupe d'un détail illustrant une phase intermédiaire de l'étape de déformation-pénétration au niveau d'un plot de rigidification de la paroi inférieure du panneau creux au cours du procédé de moulage selon l'invention ;
. la figure 7 est un schéma en coupe d'un détail illustrant la fin de l'étape de déformation-pénétration au niveau d'un plot de rigidification de la paroi inférieure du panneau creux et le thermosoudage à ce niveau des parois inférieure et supérieure du panneau creux au cours du procédé de moulage selon l'invention ;
. la figure 8 est une vue en perspective de la partie supérieure d'une tablette arrière amovible pour véhicule automobile pouvant être réalisée par le procédé selon la présente invention ;
. la figure 9 est une vue en coupe transversale, selon la ligne de coupe IX-IX, de la tablette arrière amovible pour véhicule représentée sur la figure 8.

Le procédé de fabrication d'un panneau creux selon la présente invention ainsi que le panneau obtenu vont maintenant être décrits de façon détaillée en référence aux figures 1 à 9. Les éléments équivalents représentés sur les différentes figures porteront les mêmes références numériques.

La figure 1 illustre schématiquement le procédé de fabrication d'un panneau creux par moulage-soufflage selon l'art antérieur.

Un tube de matière plastique est chauffé jusqu'à ramollissement de la matière et placé entre deux pièces de conformation d'un moule. Il subit alors un gonflage extensif par une insufflation de fluide gazeux sous pression qui a pour but de plaquer la matière plastique contre des surfaces de conformation constituant les pièces du moule. Lors de la fermeture du moule et de l'application de la surface latérale du tube contre les surfaces de conformation du moule, il se crée les parois de l'objet moulé dont les parois principales 1 et 2 bordées par des parois de chant.

Les parois du tube sont forcées en écartement par la pression d'un fluide gazeux de soufflage symbolisé par la flèche A sur les figures 1 et 2. Ce gaz de soufflage, de préférence de l'air comprimé plaque les parois 1 et 2 du tube de matière première ramollie, contre deux pièces de conformation 3 et 4 du moule 5 et les pièces de conformation des chants.

Les deux pièces de conformation 3 et 4 du moule 5 reproduisent la forme souhaitée pour les deux faces extérieures des parois du panneau creux.

La pièce de conformation supérieure 3, correspondant à la face supérieure du panneau creux, présente ainsi une paroi sensiblement lisse.

Au contraire, la pièce de conformation inférieure 4 du moule, correspondant à la face inférieure du panneau creux, présente un ensemble de reliefs 6, par exemple en forme de dièdres.

Afin de recouvrir la face supérieure du panneau creux, une feuille de revêtement 7 est intercalée entre la pièce de conformation 3 du moule et la paroi supérieure 1 de matière première. Il s'agit par exemple d'une surface de moquette synthétique dont la face avant se trouve dirigée vers la paroi lisse de la pièce de conformation 3 du moule 5.

Les deux pièces 3 et 4 de conformation du moule 5 sont rapprochées l'une vers l'autre, suivant une direction symbolisée sur les figures 1 et 2 par les deux flèches B en regard, de manière à refermer le moule 5. Au cours de cette phase de rapprochement, le tube s'aplatit de manière à former les deux faces principales supérieure 1 et inférieure 2 du panneau creux ainsi que ses deux chants longitudinaux. Les deux extrémités du tube sont simultanément fermées par pinçage et thermoformage afin de réaliser les deux chants latéraux du panneau creux.

Un gaz de soufflage est alors insufflé à l'intérieur du volume creux fermé délimité par les parois de la paraison, au moyen d'une aiguille métallique. Les parois 1 et 2 de matière plastique sont alors plaquées sur les deux pièces 3 et 4 de conformation du moule 5 sous l'effet de la pression du fluide de soufflage, constitué généralement d'air comprimé.

L'air comprimé occupe temporairement la partie centrale du panneau. La pression apportée par l'air comprimé de soufflage agit comme une force uniforme de plaquage contre les pièces 3 et 4 du moule des parois de matière plastique.

La pièce inférieure 4 du moule imprime, au moyen de ses reliefs 6 servant de contre-formes, des cavités dans la paroi inférieure 2 du panneau creux en la déformant localement en direction de la paroi supérieure 1.

A la fin de cette opération, le sommet de chaque déformation de la paroi inférieure 2 vient à chaud en contact avec la paroi supérieure 1 du panneau creux jusqu'à réunir les deux parois 1 et 2 par thermosoudage. A ce niveau, les deux parois opposées 1 et 2 sont réunies localement sur un ou plusieurs segments de droite formant ainsi des segments de rigidification qui confèrent solidité et rigidité au panneau creux.

Au cours de ce procédé selon l'art antérieur, la pression de l'air comprimé de soufflage provoque l'écartement des parois du tube et le plaquage de celles-ci contre les pièces 3 et 4 de conformation du moule 5. Le revêtement 7 est alors solidarisé uniformément contre la matière plastique de la paroi supérieure 1 du panneau creux au moyen d'une couche d'adhésif préalablement appliquée ou par simple thermocollage lors du moulage-soufflage.

Le panneau creux sort ainsi fini de moulage et garni d'un revêtement sur l'une de ses faces en une seule opération de fabrication.

La figure 2 illustre schématiquement le procédé par moulage selon l'invention permettant avantageusement de fabriquer un panneau creux garni d'un revêtement sur ses deux faces.

Comme précédemment, les parois 1 et 2 d'un tube aplati de matière plastique sont écartées par un fluide gazeux et plaquées contre les deux pièces, l'une supérieure 8 et l'autre inférieure 9 de conformation d'un moule 5 de forme adaptée à celle souhaitée pour le panneau creux et présentant cette fois toutes les deux une paroi sensiblement lisse.

Les parois 1 et 2, servant de matière première à la réalisation des parois supérieure et inférieure du panneau creux, sont constituées préférentiellement de polypropylène. Il peut également s'agir d'une autre matière plastique comme par exemple du polyéthylène ou tout autre matériau thermoplastique.

Le tube de départ est préalablement chauffé et porté à une température de ramollissement, comprise de préférence entre 150°C et 300°C, au moyen d'un dispositif de chauffage non représenté pouvant par exemple comprendre une rampe infrarouge ou un dispositif de soufflage d'air chaud. Lorsque l'on utilise du polypropylène, la température des parois 1 et 2 est préférentiellement portée aux environs de 200°C.

Les deux parois 1 et 2 sont forcées en écartement par un flux de gaz de soufflage, de préférence de l'air comprimé, insufflé à l'intérieur du tube à une pression par exemple d'environ 15 bars.

Afin de recouvrir de revêtement les deux parois 1 et 2 du futur panneau creux, des feuilles de revêtement 10 et 11 sont intercalées respectivement entre la pièce supérieure 8 du moule et la paroi supérieure 1 de matière première, et la paroi inférieure 2 de matière première et la pièce inférieure 9 du moule.

Les feuilles de revêtement 10 et 11 peuvent être de nature quelconque, en matériau tissé ou non tissé, naturel ou synthétique. Il s'agit préférentiellement d'une moquette synthétique, par exemple un aiguilleté, dont la face avant, devenant la face extérieure des parois principales du panneau, se trouve dirigée vers la paroi lisse de chacune des pièces 8 et 9 de conformation du moule 5.

La feuille de revêtement 11 présente sur sa face arrière une pluralité de plots de rigidification 12 constituant des reliefs dirigés vers la paroi inférieure 2 en matière plastique.

La face arrière du revêtement 11 et ses plots de rigidification 12 sont illustrés plus particulièrement sur les figures 3 et 4 représentant deux modes de réalisation différents de ceux-ci.

Les plots de rigidification 12 comportent deux parois longitudinales 13, de préférence identiques et sensiblement rectangulaires, jointives longitudinalement selon une arête commune 14 de manière à former un dièdre. Les deux faces latérales de chaque plot de rigidification 12 sont fermées par deux parois latérales 15 empêchant lors du soufflage la pénétration de matière plastique sous et à l'intérieur des plots de rigidification préférentiellement creux.

Chacune de ces parois longitudinales 13 peut être bordée le long de son bord opposé à l'arête commune 14 par un rebord de fixation 16 longitudinal.

Les plots de rigidification 12 sont rapportés sur la face arrière du revêtement 11 à laquelle ils peuvent être solidarisés, individuellement ou de façon groupés au moyen d'un filet intermédiaire les reliant les uns aux autres ou de liaisons directes formant une grappe. Les rebords 16, sensiblement parallèles à la face arrière du revêtement, peuvent faciliter cette solidarisation en servant par exemple de rebord de collage sur lesquels on peut préalablement appliquer une substance adhésive.

Les plots de rigidification 12 peuvent être fixés par tout autre moyen imaginable sans sortir du cadre de la présente invention. Ils peuvent par exemple être cousus, soudés, thermocollés ou maintenus par un dispositif mécanique quelconque tel que des agrafes, crochets ou harpons.

Le nombre et la disposition des plots 12 peuvent être différents de ceux représentés sur les figures sans sortir du cadre de la présente invention. Généralement, ils sont choisis afin de réaliser le nombre et la disposition de segments de rigidification les plus appropriés pour le panneau creux selon sa destination future et en fonction de considérations techniques et économiques.

Les plots 12 peuvent ainsi, par exemple, être disposés en quinconce comme sur les figures 3 et 4.

Les plots de rigidification 12 peuvent être réalisés en métal, mais le sont de préférence en matière plastique selon un procédé non décrit car ne posant aucune difficulté à l'homme du métier.

Selon une variante non représentée, la face inférieure des plots 12, en contact avec la face arrière du revêtement 11, peut également être fermée par une paroi en matière plastique. Les plots de rigidification 12 se présentent alors sous la forme de pièces creuses pouvant être fabriquées par exemple par moulage-soufflage.

Avantageusement avec cette variante, la feuille de revêtement 11 s'appuie sur une surface lisse et ne comportant pas de creux. La face inférieure du panneau creux ne présente plus de zone de résistance plus faible au niveau des plots de rigidification.

Une autre variante non représentée peut être proposée pour arriver à un résultat semblable. Elle consiste à prévoir un ensemble de nervures, longitudinales et/ou transversales, s'étendant à l'intérieur des plots de rigidification 12 en direction de la face arrière du revêtement 11. La face arrière des plots 12 fournit ainsi une surface d'appui rigide plus importante pour le revêtement 11.

Les plots de rigidification 12 de ce mode de réalisation peuvent par exemple être fabriqués par injection.

Afin de positionner plus facilement et plus rapidement les plots 12 sur la face arrière du revêtement 11, ceux-ci peuvent être reliés les uns aux autres au moyen de liaisons 17 de faible section en matière plastique réalisées simultanément à la formation des plots. L'ensemble des plots 12 forme alors une grappe, une trame, un treillis ou un maillage 18 dont les distances sont conservées.

Dans le cadre d'un procédé industriel à grand débit, le treillis 18 de plots 12 peut ainsi être facilement déposé en continu sur et éventuellement solidarisé à une bande continue de revêtement 11 avant sa pénétration dans le moule 5 pour l'opération de moulage.

Comme précédemment, on ferme le moule 5 en rapprochant l'une vers l'autre ses deux pièces 8 et 9 de conformation de manière à aplatir le tube et à le fermer à ses extrémités.

Un gaz de soufflage est insufflé à l'intérieur du volume creux fermé, au moyen par exemple d'une aiguille métallique.

Le flux gazeux de soufflage plaque les deux parois 1 et 2 de matière plastique ramollie contre la face arrière des deux surfaces de revêtement 10 et 11 recouvrant les pièces de conformation 8 et 9 du moule.

La feuille de revêtement 10 se solidarise à la paroi supérieure du panneau creux de la même façon précédemment décrite que dans l'art antérieur.

Lors du rapprochement des deux parties du moule et du plaquage de la matière par le travail du fluide gazeux insufflé, les plots de rigidification 12 déforment la paroi inférieure 2 et poussent la matière de cette paroi en l'amincissant vers la paroi opposée 1 jusqu'à la thermo-jonction. Les différentes phases de cette étape de déformation de la paroi inférieure 2 ont été illustrées sur les figures 5 à 7 et vont maintenant être décrites en détail.

La partie supérieure des plots de rigidification 12, rapportés sur la face arrière du revêtement 11, entre localement en contact avec la paroi inférieure ramollie 2. Du fait des propriétés de déformation élastique de la paroi ramollie et de la forme adaptée des plots de rigidification 12, la paroi 2 se déforme progressivement sans se rompre au fur et à mesure de la pénétration des plots de rigidification 12 et forme des bourrelets 19 de matière plastique enveloppant la partie supérieure des plots 12.

Au fur et à mesure du rapprochement des pièces de moulage 8 et 9 et/ou du plaquage de la matière plastique sous l'effet de la pression de soufflage, la progression des plots de rigidification 12 provoque un étirement local de la matière plastique en direction de la paroi supérieure 1.

A la fin de cette opération, le sommet 20 en segment de droite de chaque déformation 19 de la paroi inférieure 2, correspondant à l'arête 14 de chaque plot 12, vient à chaud en contact avec la paroi supérieure 1 du panneau creux jusqu'à réunir les deux parois 1 et 2 par thermosoudage. Les deux parois opposées 1 et 2 sont ainsi réunies localement sur un ou plusieurs segments de droite qui constituent des segments de rigidification 21 conférant solidité et rigidité au panneau creux.

En fin de course, la face arrière du revêtement 11 se retrouve contre la paroi inférieure 2 du panneau poussée par la pression du fluide gazeux de soufflage. Le thermocollage du revêtement 11 et de la paroi inférieure 2 s'effectue de façon uniforme en même temps que la thermo-jonction des deux parois 1 et 2 au niveau des segments de rigidification 21.

Avantageusement, on obtient ainsi en une seule étape de moulage un panneau creux fini, suffisamment rigide grâce aux segments de rigidification 21 et garni d'un revêtement 10 et 11 sur chacune de ses deux faces principales 1 et 2.

A la fin du procédé selon l'invention, les plots de rigidification 12 sont complètement intégrés au panneau creux et ne peuvent pas être retirés pour être réutilisés. Ils constituent une matière perdue et doivent donc remplir correctement leurs fonctions tout en étant les moins onéreux possible. Ils sont ainsi de préférence réalisés en matière plastique.

Afin de pouvoir assurer une bonne pénétration et une déformation efficace de la paroi inférieure 2 en matière plastique ramollie, les plots de rigidification 12 doivent présenter de préférence des caractéristiques thermoplastiques différentes de la matière première des deux parois opposées du panneau creux. Leur température de fusion doit être supérieure à celle de la matière plastique des parois 1 et 2 pour qu'ils ne soient pas affectés par la température de celle-ci.

Les plots 12 peuvent ainsi par exemple être réalisés en polypropylène chargé, renforcé par des fibres ou du talc, conférant ainsi une rigidité améliorée au polypropylène qui assure une meilleure pénétration des plots dans la paroi 2.

Les plots 12 peuvent également être réalisés avec le même matériau que les parois 1 et 2 du panneau, en polypropylène par exemple. En effet, l'étape de moulage est suffisamment rapide pour que les plots de rigidification 12 en contact avec la paroi chaude 2 ne se ramollissent qu'en surface et conservent une rigidité suffisante à coeur pour permettre une déformation satisfaisante de la paroi 2. Par ailleurs, cette fusion superficielle des plots de rigidification 12 permet avantageusement un effet de soudure locale entre la paroi 2 et les plots 12 qui améliore leur ancrage dans le panneau.

Il doit être bien compris que les plots de rigidification représentés et décrits précédemment constituent un exemple de réalisation préférentielle qui ne limite en rien la portée de l'invention. En effet, les plots de rigidification peuvent être de forme, de taille, de matière ou en nombre différents sans sortir du cadre de la présente invention, du moment qu'ils permettent une déformation satisfaisante de la paroi inférieure aboutissant à une thermojonction locale de celle-ci avec la paroi opposée du panneau creux.

Ils peuvent ainsi par exemple se présenter sous la forme de plots coniques ou de calottes sphériques. Ils peuvent également ne pas être limités à une longueur de quelques centimètres, mais constituer de véritables profilés de grande longueur, s'étendant par exemple sur sensiblement toute la longueur du panneau creux. Ils jouent alors un rôle supplémentaire de raidisseurs améliorant la rigidité du panneau creux. Cet effet est encore accru s'ils sont réalisés en métal.

De manière évidente, les déformations peuvent être réalisées dans une paroi quelconque du panneau creux et ne se limitent pas à la paroi inférieure de celui-ci.

A la fin du moulage, le panneau peut simultanément être découpé selon son contour définitif par un dispositif de coupe intégré au moule 5 et non représenté car largement connu de l'homme du métier.

Afin d'éviter une déformation du panneau creux lors du démoulage, les deux pièces 8 et 9 de conformation du moule 5 sont refroidies en permanence et maintenues à une température comprise préférentiellement entre 20 et 60°C au moyen par exemple d'un dispositif de circulation d'eau de refroidissement.

Le procédé selon l'invention permet de réaliser, en une seule opération de moulage, un panneau creux garni de revêtement sur ses deux faces principales. Un tel panneau peut avoir de nombreuses applications. Il peut par exemple être utilisé comme élément de support, comme paroi d'isolation ou de séparation.

Une application préférentielle mais non limitative du procédé selon l'invention est la réalisation de tablettes arrière amovibles 22 pour véhicule, dont un mode de réalisation a été représenté sur les figures 8 et 9.

Cette tablette, séparant l'habitacle du coffre arrière d'un véhicule automobile doit être capable d'absorber le bruit de roulement provenant du coffre et de soutenir sans fléchir les objets qui sont posés dessus. Elle doit donc présenter une rigidité suffisante ainsi que de bonnes propriétés d'isolation phonique.

Avantageusement, la tablette 22 selon l'invention possède des propriétés d'isolation phonique améliorées du fait de la présence d'un revêtement 10 et 11 sur chacune de ses faces principales 1 et 2.

En outre, sa rigidité est assurée par les segments de rigidification 21 réunissant les deux parois opposées 1 et 2 de la tablette creuse 22.

Pour accroître encore sa rigidité, des tubes métalliques 23 et 24, préférentiellement en acier, peuvent être introduits longitudinalement à l'intérieur de la tablette au cours du moulage. Afin d'éviter un effet de charnière pouvant conduire à une pliure, voire à une rupture en cas de charge trop importante sur la tablette, ces tubes 23 et 24 ne se prolongent pas jusqu'aux extrémités latérales de la tablette.

Avantageusement, l'utilisation de profilés métalliques comme plots de rigidification peut permettre d'éviter l'ajout de ces tubes 23 et 24 en acier.

Par ailleurs, afin d'éviter que les objets posés sur la tablette ne tombent lors des mouvements du véhicule, la tablette peut être déformée de manière à présenter sur sa face supérieure 1 un ou plusieurs renfoncements 25 formant plumier. Sur l'exemple représenté, ces renfoncements sont au nombre de deux. Ils peuvent évidemment être de forme, de taille et de nombre différents.

Une telle tablette 22 peut être réalisée sans aucun problème avec le procédé selon l'invention. Les pièces 8 et 9 de conformation du moule 5 présentent dans ce cas des zones en saillie et en creux de forme complémentaire aux différents renfoncements 25 des parois de la tablette. Le procédé peut ensuite être réalisé de la façon décrite précédemment.

Ainsi, les pièces 8 et 9 de conformation du moule 5 peuvent présenter des variations par rapport aux modes de réalisation représentés et décrits dans cette demande sans échapper à la portée de l'invention définie dans les revendications.

La tablette 22 peut en outre comporter une charnière 26 s'étendant longitudinalement sensiblement au milieu de la tablette sur toute sa longueur. Une telle charnière 26 permet avantageusement de pouvoir replier une partie de la tablette 22 afin d'accéder plus facilement au coffre du véhicule.

Il doit être bien compris que la description ci-dessus n'est donnée qu'à titre illustratif, l'invention n'étant en aucun cas limitée à un type particulier de tablettes arrières pour véhicule automobile. Ces tablettes ne constituent par ailleurs qu'un exemple préférentiel d'application du procédé selon l'invention.

On a décrit ci-dessus un procédé de moulage utilisant la technique du soufflage par un fluide gazeux. L'invention peut cependant être transposée sans difficulté à une autre technique de moulage, par exemple celle connue sous le terme de thermoformage et plus particulièrement celle appelée technique du « twin-sheet ». Selon ce procédé, on pourrait réaliser le panneau en deux opérations de thermoformage relatives à chacune de ses parois et les thermo-solidariser lors d'une opération finale.

De la même façon, certaines variantes du procédé peuvent aussi être envisagées. Par exemple, la matière plastique peut être plaquée contre les parois du moule, non plus par la pression d'un gaz de soufflage, mais au moyen d'une aspiration au niveau des pièces de conformation du moule.

## Revendications

1. Procédé de fabrication d'un panneau creux garni d'un revêtement sur ses deux faces **caractérisé en ce qu'**il est constitué d'une unique opération de moulage pendant laquelle au moins un plot de rigidification (12), rapporté sur la face arrière d'une surface de revêtement (11) destinée à recouvrir l'une des parois (2) du panneau creux, déforme localement la matière plastique de cette paroi (2) et la pousse vers une autre paroi (1) du panneau creux jusqu'à provoquer une thermo-jonction de ces deux parois (1, 2) aboutissant à la formation d'un segment de rigidification (21).

2. Procédé de fabrication d'un panneau creux selon la revendication 1 **caractérisé en ce que** l'opération de moulage est une opération de thermoformage.

3. Procédé de fabrication d'un panneau creux selon la revendication 1 **caractérisé en ce que** l'opération de moulage est une opération de moulage-soufflage.

4. Procédé de fabrication d'un panneau creux selon la revendication précédente **caractérisé en ce que** l'opération de moulage-soufflage comprend les étapes suivantes :
. introduction entre les pièces (8, 9) de conformation d'un moule (5) d'un tube en matière plastique chauffé ;
. insertion entre les pièces (8, 9) de moule et les parois supérieure (1) et inférieure (2) du tube de surfaces de revêtement (10, 11) dont la face avant est dirigée vers les pièces de moule, l'une de ces surfaces de revêtement (11) présentant au moins un plot de rigidification (12) rapporté sur sa face arrière ;
. fermeture des extrémités latérales du tube par pincement provoqué par le rapprochement des pièces (8, 9) de conformation du moule et insufflation d'un gaz de soufflage (A) à l'intérieur du tube forçant les parois (1, 2) du tube en écartement contre les parois des pièces (8, 9) de conformation du moule et contre cet au moins un plot de rigidification (12) ;
. déformation localisée de l'une des parois (2) de matière plastique au moyen de cet au moins un plot de rigidification (12) qui la pousse vers la paroi opposée (1) jusqu'à la thermo-jonction aboutissant à la formation d'au moins un segment de rigidification (21).

5. Procédé de fabrication d'un panneau creux selon l'une quelconque des revendications précédentes **caractérisé en ce qu'**un thermocollage des faces arrières des surfaces de revêtement (10, 11) contre les parois (1, 2) du panneau s'effectue de façon uniforme au cours de cette unique opération de moulage.

6. Procédé de fabrication d'un panneau creux selon l'une quelconque des revendications précédentes **caractérisé en ce que** les pièces (8, 9) de conformation du moule (5) présentent une face de moulage sensiblement lisse.

7. Procédé de fabrication d'un panneau creux selon l'une quelconque des revendications précédentes **caractérisé en ce que** les pièces (8, 9) de conformation du moule (5) sont refroidies et maintenues à une température comprise préférentiellement entre 20 et 60°C.

8. Procédé de fabrication d'un panneau creux selon l'une quelconque des revendications précédentes **caractérisé en ce que** le panneau creux est réalisé à partir d'un matériau thermoplastique et de préférence à partir de polypropylène ou de polyéthylène.

9. Procédé de fabrication d'un panneau creux selon l'une quelconque des revendications précédentes
**caractérisé en ce que** la matière plastique est portée à une température de ramollissement, comprise de préférence entre 150 et 300°C, préalablement à son introduction entre les pièces (8, 9) de conformation du moule.

10. Procédé de fabrication d'un panneau creux selon l'une quelconque des revendications 3 à 9 **caractérisé en ce que** le flux gazeux de soufflage (A) est un flux d'air comprimé de préférence à une pression d'environ 15 bars.

11. Procédé de fabrication d'un panneau creux selon l'une quelconque des revendications précédentes **caractérisé en ce que** les surfaces de revêtement (10, 11) sont réalisées à partir d'une moquette synthétique.

12. Procédé de fabrication d'un panneau creux selon l'une quelconque des revendications précédentes **caractérisé en ce qu'**au moins un des plots de rigidification (12) est réalisé en métal ou en matière plastique et de préférence en polypropylène chargé.

13. Procédé de fabrication d'un panneau creux selon l'une quelconque des revendications précédentes **caractérisé en ce que** certains plots de rigidification (12) sont reliés les uns aux autres de façon à former une grappe, une trame, un treillis ou un maillage (18).

14. Procédé de fabrication d'un panneau creux selon l'une quelconque des revendications précédentes **caractérisé en ce qu'**au moins un des plots de rigidification (12) présente une forme de dièdre, de plot conique ou de calotte sphérique.

15. Procédé de fabrication d'un panneau creux selon l'une quelconque des revendications précédentes **caractérisé en ce qu'**au moins un des plots de rigidification (12) comporte un rebord de fixation (16).

16. Procédé de fabrication d'un panneau creux selon l'une quelconque des revendications précédentes **caractérisé en ce qu'**au moins un des plots de rigidification (12) est solidarisé à la face arrière du revêtement (11) sur laquelle il est rapporté, par collage, thermocollage, soudage, couture ou au moyen d'un dispositif mécanique quelconque.

17. Procédé de fabrication d'un panneau creux selon l'un quelconque des revendications précédentes **caractérisé en ce que** l'un au moins des plots de rigidification (12) est un profilé de grande longueur jouant un rôle de raidisseur.

18. Panneau creux garni d'un revêtement sur ses deux faces **caractérisé en ce qu'**il peut être fabriqué au cours d'un procédé selon l'une quelconque des revendications précédentes.

19. Panneau creux selon la revendication précédente **caractérisé en ce qu'**il est utilisé pour la réalisation d'une tablette arrière amovible (22) de véhicule automobile.
